# FASCICULE DE BREVET EUROPEEN

(11) **EP 1 486 713 B1**
(45) Date de publication et mention de la délivrance du brevet: **07.06.2006**
(21) Numéro de dépôt: 04356089.5
(22) Date de dépôt: 04.06.2004
(51) Int. Cl.: F16L 13/14

(54) **Dispositif d'emboîture de raccord à sertir à gorge de profondeur variable**
Verpressbare Steckverbindung mit einer Nut variabler Tiefe
Compression fitting with a groove of variable depth

(30) Priorité: 10.06.2003 FR 0306935
(43) Date de publication de la demande: 15.12.2004
(73) Titulaire: COMAP, 69008 Lyon (FR)
(72) Inventeur: Tuffe, Stéphane, 69740 Genas (FR); Van Speybroek, Grégory, 45450 Sully la Chapelle (FR)
(74) Mandataire: Maureau, Philippe

(56) Documents cités:
- EP-A- 1 249 655
- WO-A-01/63160
- DE-A- 10 118 955
- DE-U- 20 201 074
- DE-U- 29 813 935

## Description

La présente invention concerne, un dispositif de raccordement à sertir pour tubes, notamment pour tubes destinés à conduire un fluide.

Le domaine d'application de la présente invention est le raccordement de tubes destinés à conduire des fluides qui se trouvent sous une pression de quelques bars. Il peut par exemple s'agir de conduites d'eau telles les conduites d'eau à usage sanitaire ou de chauffage, ou de conduites de gaz.

Pour raccorder des tubes dans le cadre de leur l'installation, il est connu d'utiliser des dispositifs de raccordement de forme cylindrique circulaire comprenant sur leur face intérieure une gorge circulaire formant un logement pour un élément d'étanchéité.

L'installation comprend alors une phase d'emboîtement d'un tube et d'un raccord, puis une phase de sertissage au cours de laquelle le raccord est serti sur l'extrémité du tube, le sertissage permettant de garantir la tenue mécanique durable de l'installation et son étanchéité.

Afin de garantir l'étanchéité durable de l'installation, il est nécessaire de sertir tous les raccords. Diverses solutions ont été envisagées pour permettre à l'utilisateur de vérifier que tous les raccords ont été sertis. Des dispositifs de marquage sont utilisés, mais ceux-ci nécessitent une vérification individuelle de chaque raccord.

Une autre possibilité est la création d'une fuite provoquée au niveau du raccord tant que celui-ci n'est pas serti. Cette approche permet à l'opérateur de détecter les raccords non sertis en mettant l'installation sous pression, soit visuellement en repérant les fuites, soit en constatant une pression plus faible que la pression normale dans l'installation, ce qui permet une vérification globale du sertissage des raccords de l'installation. Ces fuites peuvent être provoquées par des joints de forme spécifiques, ce qui implique une fabrication coûteuse et peut impliquer un positionnement particulier du joint dans une gorge prévue à cet effet. Les fuites peuvent également être provoquées par la forme du raccord, permettant ainsi d'utiliser des joints communs toriques de section constante.

En particulier, les documents DE 101, 18, 955 A et WO 01/63160 A décrivent deux dispositifs permettant de réaliser de telles fuites provoquées avant sertissage.

Le document DE 101, 18, 955 A décrit un raccord métallique présentant transversalement au minimum une gorge sur sa face intérieure logeant un joint d'étanchéité et compte tenu des tolérances de montage de l'élément d'étanchéité, du raccord serti et du conduit, l'élément d'étanchéité est dimensionné de manière à occuper relativement à la gorge et au conduit une position radiale ménageant un interstice continu autorisant le passage du fluide à transporter. A

Le document WO 01/63160 A décrit un raccord selon le préambule de la revendication 1 destiné à être raccordé à un tube, dont l'extrémité est destinée à réaliser une connexion sertie, et comportant une gorge sur sa face intérieure dans lequel est logé un joint d'étanchéité, au moins une bosse se trouvant sur la gorge. Cette bosse permet de ménager un passage de fuite dans la zone de la bosse entre le joint d'étanchéité et la paroi de l'extrémité finale.

Dans les deux documents cités ci-dessus, les fuites sont occasionnées par un passage local ou annulaire. Le principal inconvénient des dispositifs ci-dessus est la mauvaise tenue mécanique entre le tube et le raccord avant sertissage.

En effet, il est souhaitable lors de l'installation des tubes, l'ensemble formé par les tubes et les raccords puisse se maintenir en position, permettant à l'opérateur de réaliser plus facilement le montage sans avoir à assurer le maintien en position des tubes déjà raccordés.

A cet effet, la présente invention a pour objet un raccord à sertir pour tubes comportant une portion cylindrique circulaire à sertir de diamètre interne sensiblement égal au diamètre externe du tube à raccorder, une gorge périphérique ménagée dans la portion cylindrique à l'intérieur de celle-ci formant un logement pour un joint d'étanchéité, la gorge périphérique présentant transversalement à l'axe de la portion cylindrique, une profondeur variable avant sertissage de façon à créer au moins une zone de compression sur le joint, dans laquelle l'écart radial entre le fond de la gorge et la paroi extérieure du tube est inférieur au diamètre de la section du joint non-deformé et au moins une zone de fuite dans laquelle l'écart radial entre le fond de la gorge et la paroi extérieure du tube est supérieur au diamètre de la section du joint, le joint se déformant sous l'effet de la pression exercée par la paroi extérieure du tube et la gorge dans la zone de compression, caractérisé en ce que le joint menage au moins un passage de fuite dans au moins une zone de fuite entre la partie intérieure du joint et la paroi extérieure du tube.

La ou les zones de compression permettent de maintenir le tube en position en exerçant une pression sur sa paroi extérieure par l'intermédiaire du joint comprimé.

Selon une possibilité, en tout point de la périphérie de la gorge, la distance radiale du fond de gorge à l'axe de la portion cylindrique est inférieure à la valeur que prendrait la distance radiale de la partie extérieure du joint à l'axe de la portion cylindrique si le joint était déformé par la pression exercée dans la ou les zones de compressions et libre de pression en dehors des zones de compressions, le fond de la gorge étant ainsi au contact de la partie extérieure du joint sur toute sa périphérie et des passages de fuite étant ménagés entre la partie intérieure du joint et la paroi extérieure du tube.

Selon une autre possibilité, la distance radiale du fond de gorge à l'axe de la portion cylindrique est supérieure dans les zones de fuite à la valeur que prendrait la distance radiale de la partie extérieure du joint à l'axe de la portion cylindrique si le joint était déformé par la pression exercée dans la ou les zones de compressions et libre de pression en dehors des zones de compressions, le fond de la gorge n'étant ainsi pas au contact de la partie extérieure du joint et des passages de fuite étant ménagés à la fois entre la partie intérieure du joint et la paroi extérieure du tube et entre le fond de la gorge et la partie extérieure du joint.

Les deux possibilités correspondent à des configurations différentes de la gorge et du joint.

Avantageusement, le raccord comporte deux zones de compression sur le joint.

Avantageusement, les deux zones de compression sont diamétralement opposées, et les zones de fuites, elles aussi diamétralement opposées, sont situées à 90° par rapport aux zones de compression.

Avantageusement, le profil radial du fond de la gorge est ovale.

L'invention sera mieux comprise à l'aide de la description qui suit, en référence au dessin schématique annexé représentant une forme d'exécution du dispositif d'emboîture de raccords à sertir.
La figure 1 en est une vue en coupe transversale selon un premier mode de réalisation.
La figure 2 en est une vue en coupe longitudinale selon II :II de figure 1.
La figure 3 est une vue en coupe transversale agrandie selon un premier mode de réalisation.
La figure 4 en est une vue en coupe transversale selon un second mode de réalisation.
La figure 5 en est une vue en coupe longitudinale selon V :V de figure 4.
La figure 6 est une vue en coupe transversale agrandie selon un second mode de réalisation.

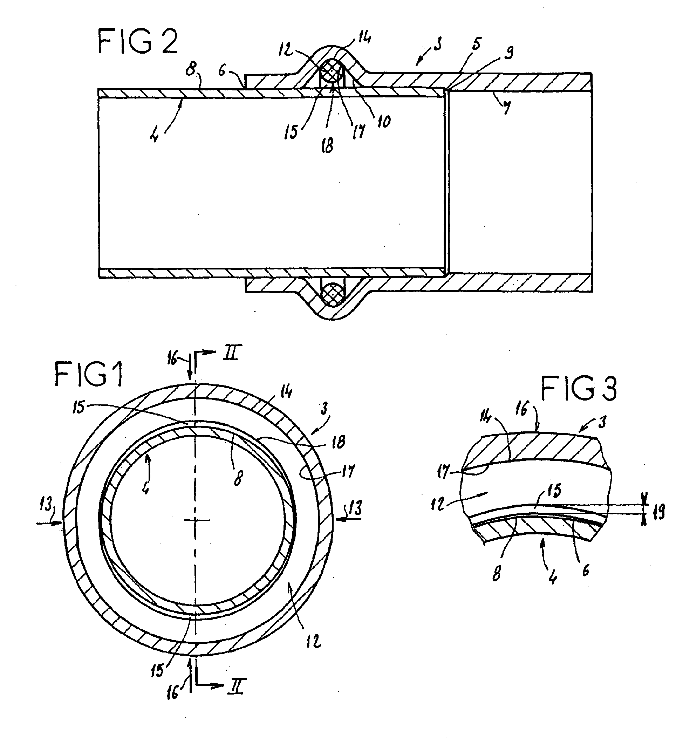

Selon un premier mode de réalisation, représenté sur les figures 1, 2 et 3, le dispositif d'emboîture 2 selon l'invention de raccord à sertir 3 comporte une portion cylindrique circulaire 5 à sertir de diamètre interne sensiblement égal au diamètre externe du tube 4 à raccorder. Il existe toutefois un jeu 6 permettant le montage et le passage du fluide entre la paroi intérieur 7 de la portion cylindrique 5 et la paroi extérieure du tube 8.

Le positionnement longitudinal du tube 4 par rapport au raccord 3 est assuré par une butée 9 ménagée sous forme d'une réduction de diamètre intérieur de la portion cylindrique 5.

Une gorge périphérique 10 est ménagée dans la portion cylindrique 5 à l'intérieur de celle-ci formant un logement pour un joint d'étanchéité 12.

La gorge périphérique 10 présente, transversalement à l'axe de la portion cylindrique 5, une profondeur variable avant sertissage pour créer, dans ce mode de réalisation, deux zones de compression 13 sur le joint 12, ces zones de compression 13 étant diamétralement opposées sur la gorge 10.

Le joint 12 présente au repos un diamètre intérieur de tore sensiblement égal au diamètre extérieur du tube 4.

Dans chacune des zones de compression 13, l'écart radial entre le fond 14 de la gorge 10 et la paroi extérieure 8 du tube 4 est inférieur au diamètre de la section du joint 12. En conséquence, ce joint 12 se déforme sous l'effet de la pression exercée. La déformation crée deux passages de fuite 15 en deux zones de fuite 16 situées à 90° des zones de compressions 13.

La déformation du joint est possible car l'écart radial entre le fond 14 de la gorge 10 et la paroi extérieure 8 du tube 4 est supérieur au diamètre de la section du joint 12 dans les zones de fuites 16.

Dans ce mode de réalisation, le profil radial du fond de la gorge 10 est de forme ovale, les zones de compression 13 correspondant au rayon minimum de l'ovale, les zones de fuite 16 correspondant au rayon maximal de l'ovale.

En particulier, le rayon maximal est choisi de façon à ce que le joint 12 soit en contact sur sa partie extérieure 17 avec le fond 14 de la gorge 10 sur toute sa périphérie. Ainsi, dans ce mode de réalisation, les passages de fuite 15 sont situés entre la partie intérieure 18 du joint 12 et la paroi extérieure 8 du tube 4. Les passages de fuites peuvent être mesurés par un jeu 19.

Les zones de compressions 13 permettent d'assurer la tenue mécanique de l'ensemble formé par le raccord 3, le joint 12 et le tube 4. Le raccord 3 et le tube 4 sont maintenus en position par la pression élastique tendant à rendre au joint 12 sa forme initiale.

Lors du sertissage, la différence de profondeur de gorge 10 entre les zones de compression 13 et de fuite 16 disparaît, la gorge 10 reprenant sensiblement une forme circulaire de profondeur réduite, le sertissage garantissant une étanchéité complète du raccordement.

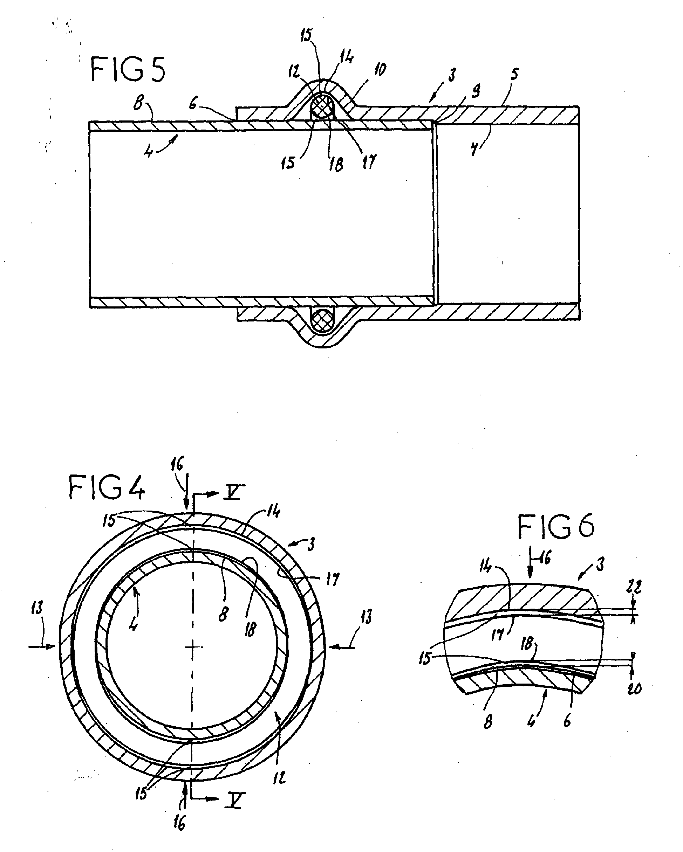

Selon un second mode de réalisation, représenté sur les figures 4, 5 et 6, le raccord 3 selon l'invention comporte les mêmes éléments que dans le premier mode de réalisation.

Le profil radial du fond de la gorge 10 est également de forme ovale, les zones de compression 13 correspondant au rayon minimal de l'ovale, les zones de fuite 16 correspondant au rayon maximal de l'ovale.

Dans ce mode de réalisation, le rayon maximal est choisi de façon à ce que le joint 12 ne soit pas en contact sur sa partie extérieure 17 avec le fond 14 de la gorge 10 sur toute sa périphérie. Ainsi, dans ce mode de réalisation, les passages de fuite 15 sont situés à la fois entre la partie intérieure 18 du joint 12 et la paroi extérieure 8 du tube 4, mais aussi entre la partie extérieure 17 du joint 12 et le fond 14 de la gorge 10. Les passages de fuites peuvent être mesurées par deux jeux 20 et 22 situés respectivement entre la partie intérieure 18 du joint 12 et la paroi extérieure 8 du tube 4, entre la partie extérieure 17 du joint 12 et le fond 14 de la gorge 10.

Dans les formes d'exécution décrites ci-dessus, le joint 12 utilisé est un joint de type standard, torique à section constante. Ce joint peut être réalisé par exemple en Ethylène-Propylène-Diène Monomère (EPDM) ou en caoutchouc butyle si le fluide conduit est de l'eau, et par exemple en nitrile butadiène si le fluide conduit est un gaz.

L'invention ne se limite pas aux formes d'exécution décrites, elle en embrasse au contraire toutes les variantes. C'est ainsi notamment que le nombre ainsi que la disposition des zones de compression 13 et des zones de fuite 16 peuvent varier. Le profil radial du fond 14 de la gorge 10 peut également présenter des formes différentes d'un ovale. La nature des fluides conduits peut également être différente.

## Revendications

1. Raccord (3) à sertir pour tubes (4) comportant une portion cylindrique circulaire (5) à sertir de diamètre interne sensiblement égal au diamètre externe du tube (4) à raccorder, une gorge périphérique (10) ménagée dans la portion cylindrique (5) à l'intérieur de celle-ci formant un logement pour un joint d'étanchéité (12), la gorge périphérique (10) présentant, transversalement à l'axe de la portion cylindrique (5), une profondeur variable avant sertissage de façon à créer au moins une zone de compression (13) sur le joint (12), dans laquelle l'écart radial entre le fond (14) de la gorge (10) et la paroi extérieure (8) du tube (4) est inférieur au diamètre de la section du joint (12) non-deformé et au moins une zone de fuite (16) dans laquelle l'écart radial entre le fond (14) de la gorge (10) et la paroi extérieure (8) du tube (4) est supérieur au diamètre de la section du joint (12), le joint (12) se déformant sous l'effet de la pression exercée par la paroi extérieure (8) du tube et la gorge (10) dans la zone de compression (13), **caractérisé en ce que** le joint (12) ménage au moins un passage de fuite (15) dans au moins une zone de fuite (16) entre la partie intérieure (18) du joint (12) et la paroi extérieure (8) du tube (4).

2. Raccord (3) selon la revendication 1, **caractérisé en ce qu'** en tout point de la périphérie de la gorge (10), la distance radiale du fond (14) de gorge (10) à l'axe de la portion cylindrique (5) est inférieure à la valeur que prendrait la distance radiale de la partie extérieure (17) du joint (12) à l'axe de la portion cylindrique (5) si le joint (12) était déformé par la pression exercée dans la ou les zones de compressions (13) et libre de pression en dehors des zones de compressions (13), le fond (14) de la gorge (10) étant ainsi au contact de la partie extérieure (17) du joint (12) sur toute sa périphérie et des passages de fuite (15) étant ménagés entre la partie intérieure (18) du joint (12) et la paroi extérieure (8) du tube (4).

3. Raccord (3) selon la revendication 1, **caractérisé en ce que** la distance radiale du fond (14) de gorge (10) à l'axe de la portion cylindrique (5) est supérieure dans les zones de fuite (16) à la valeur que prendrait la distance radiale de la partie extérieure (17) du joint (12) à l'axe de la portion cylindrique (5) si le joint (12) était déformé par la pression exercée dans la ou les zones de compressions (13) et libre de pression en dehors des zones de compressions (13), le fond (14) de la gorge (10) n'étant ainsi pas au contact de la partie extérieure (17) du joint et des passages de fuite (15) étant ménagés à la fois entre la partie intérieure (18) du joint (12) et la paroi extérieure (8) du tube (4) et entre le fond (14) de la gorge (10) et la partie extérieure (17) du joint (12).

4. Raccord (3) selon l'une des revendications 1 à 3, **caractérisée en ce qu'**il comporte deux zones de compression (13) sur le joint (12).

5. Raccord (3) selon la revendication 4, **caractérisée en ce que** les deux zones de compression (13) sont diamétralement opposées, et les zones de fuites (16), elles aussi diamétralement opposées, sont situées à 90° par rapport aux zones de compression (13).

6. Raccord (3) selon l'une des revendications 1 à 5, **caractérisé en ce que** le profil radial du fond (14) de la gorge (10) est ovale.

## Claims

1. Connector (3) for press-fitting on tubes (4), comprising a circular cylindrical portion (5) for press-fitting which has an internal diameter substantially equal to the external diameter of the tube (4) to be connected, a peripheral recess (10) formed in the cylindrical portion (5) inside the latter forming a housing for a seal (12), the peripheral groove (10) having prior to pressing a variable depth transversely to the axis of the cylindrical portion (5) so as to create at least one compression zone (13) on the seal (12), in which compression zone (13) the radial distance between the bottom (14) of the recess (10) and the external wall (8) of the tube (4) is less than the diameter of the cross-section of the non-deformed seal (12), and at least one leakage zone (16) in which the radial distance between the bottom (14) of the recess (10) and the external wall (8) of the tube (4) is greater than the diameter of the cross-section of the seal (12), the seal (12) being deformed under the effect of the pressure exerted by the external wall (8) of the tube and the recess (10) in the compression zone (13), **characterised in that** the seal (12) provides at least one leakage passage (15) in at least one leakage zone (16) between the internal portion (18) of the seal (12) and the external wall (8) of the tube (4).

2. Connector (3) according to claim 1, **characterised in that** at all points on the periphery of the recess (10) the radial distance from the bottom (14) of the recess (10) to the axis of the cylindrical portion (5) is less than the value which the radial distance from the external portion (17) of the seal (12) to the axis of the cylindrical portion (5) would have if the seal (12) were deformed by the pressure exerted in the compression zone or zones (13) and were free of pressure outside the compression zones (13), the bottom (14) of the groove (10) thus being in contact with the external portion (17) of the seal (12) along its entire periphery and leakage passages (15) being formed between the internal portion (18) of the seal (12) and the external wall (8) of the tube (4).

3. Connector (3) according to claim 1, **characterised in that** the radial distance from the bottom (14) of the recess (10) to the axis of the cylindrical portion (5) is greater in the leakage zones (16) than the value which the radial distance from the external portion (17) of the seal (12) to the axis of the cylindrical portion (5) would have if the seal (12) were deformed by the pressure exerted in the compression zone or zones (13) and were free of pressure outside the compression zones (13), the bottom (14) of the recess (10) thus not being in contact with the external portion (17) of the seal and leakage passages (15) being formed both between the internal portion (18) of the seal (12) and the external wall (8) of the tube (4) and between the bottom (14) of the groove (10) and the external portion (17) of the seal (12).

4. Connector (3) according to any one of claims 1 to 3, **characterised in that** it includes two compression zones (13) on the seal (12).

5. Connector (3) according to claim 4, **characterised in that** the two compression zones (13) are diametrically opposed and the leakage zones (16), also diametrically opposed, are located at 90° with respect to the compression zones (13).

6. Connector (3) according to any one of claims 1 to 5, **characterised in that** the radial profile of the bottom (14) of the recess (10) is oval.

## Patentansprüche

1. Quetschverbinder (3) für Rohre (4), der einen kreisförmigen zylindrischen aufzuquetschenden Abschnitt (5) mit einem Innendurchmesser umfasst, der im Wesentlichen gleich dem Außendurchmesser des anzuschließenden Rohrs (4) ist, wobei eine umlaufende Vertiefung (10), die im zylindrischen Abschnitt (5) in dessen Innerem ausgebildet ist, einen Dichtungsring (12) bildet, wobei die umlaufende Vertiefung (10) quer zur Achse des zylindrischen Abschnitts (5) vor dem Aufquetschen eine variable Tiefe aufweist, um am Dichtungsring (12) mindestens einen Kompressionsbereich (13) zu schaffen, in dem der radiale Abstand zwischen dem Boden (14) der Vertiefung (10) und der Außenwand (8) des Rohrs (4) kleiner ist als der nicht verformte Abschnitt des Dichtungsrings (12), und mindestens einen Ausweichbereich (16), in dem der radiale Abstand zwischen dem Boden (14) der Vertiefung (10) und der Außenwand (8) des Rohrs (4) größer ist als der Durchmesser des Querschnitts des Dichtungsrings (12), wobei sich der Dichtungsring (12) unter der Wirkung des durch die Außenwand (8) des Rohrs und der Vertiefung (10) im Kompressionsbereich (13) ausgeübten Drucks verformt,
**dadurch gekennzeichnet, dass**
der Dichtungsring (12) mindestens einen Ausweichkanal (15) in mindestens einem Ausweichbereich (16) zwischen dem inneren Teil (18) des Dichtungsrings (12) und der Außenwand (8) des Rohrs (4) vorsieht.

2. Verbinder (3) nach Anspruch 1,
**dadurch gekennzeichnet, dass**
an jedem Punkt des Umfangs der Vertiefung (10) der radiale Abstand des Bodens (14) der Vertiefung (10) zur Achse des zylindrischen Abschnitts (5) kleiner ist als der Wert, den der radiale. Abstand des äußeren Teils (17) des Dichtungsrings (12) zur Achse des zylindrischen Abschnitts (5) annehmen würde, wenn der Dichtungsring (12) durch den in dem oder den Kompressionsbereich/en (13) ausgeübten Druck verformt würde und außerhalb der Kompressionsbereiche (13) frei von Druck wäre,
wobei der Boden (14) der Vertiefung (10) somit über ihren ganzen Umfang in Kontakt mit dem äußeren Teil (17) des Dichtungsrings (12) steht, und
wobei Ausweichkanäle (15) zwischen dem inneren Teil (18) des Dichtungsrings (12) und der Außenwand (8) des Rohrs (4) vorgesehen sind.

3. Verbinder (3) nach Anspruch 1,
**dadurch gekennzeichnet, dass**
der radiale Abstand des Bodens (14) der Vertiefung (10) zur Achse des zylindrischen Abschnitts (5) in den Ausweichbereichen (16) größer ist als der Wert, den der radiale Abstand des äußeren Teils (17) des Dichtungsrings (12) zur Achse des zylindrischen Abschnitts (5) annehmen würde, wenn der Dichtungsring (12) durch den in dem oder den Kompressionsbereich/en (13) ausgeübten Druck verformt würde und außerhalb der Kompressionsbereiche (13) frei von Druck wäre,
wobei der Boden (14) der Vertiefung (10) somit nicht in Kontakt mit dem äußeren Teil (17) des Dichtungsrings steht, und
wobei Ausweichkanäle (15) gleichzeitig zwischen dem inneren Teil (18) des Dichtungsrings (12) und der Außenwand (8) des Rohrs (4) und zwischen dem Boden (14) der Vertiefung (10) und dem äußeren Teil (17) des Dichtungsrings (12) vorgesehen sind.

4. Verbinder (3) nach einem der Ansprüche 1 bis 3,
**dadurch gekennzeichnet, dass**
er zwei Kompressionsbereiche (13) am Dichtungsring (12) umfasst.

5. Verbinder (3) nach Anspruch 4,
**dadurch gekennzeichnet, dass**
die beiden Kompressionsbereiche (13) diametral entgegengesetzt angeordnet sind, und die Ausweichbereiche (16), die ebenfalls diametral entgegengesetzt angeordnet sind, sich in 90° Anordnung gegenüber den Kompressionsbereichen (13) befinden.

6. Verbinder (3) nach einem der Ansprüche 1 bis 5,
**dadurch gekennzeichnet, dass**
das radiale Profil des Bodens (14) der Vertiefung (10) oval ist.
